## Europäisches Patentamt

### European Patent Office

### Office européen des brevets

(11) Publication number: **0 183 209**
**B1**

## EUROPEAN PATENT SPECIFICATION

(45) Date of publication of patent specification: **23.05.90**

(21) Application number: **85114886.6**

(22) Date of filing: **23.11.85**

(51) Int. Cl.⁵: **C 21 D 9/60,** B 21 B 15/00, B 22 D 11/12, H 05 B 6/02

(54) Inductive heater for heating the edges of a longitudinally extending body with a flat cross-section.

(30) Priority: **30.11.84 SE 8406062**

(43) Date of publication of application:
**04.06.86 Bulletin 86/23**

(45) Publication of the grant of the patent:
**23.05.90 Bulletin 90/21**

(84) Designated Contracting States:
**AT DE FR GB IT**

(56) References cited:
AT-B- 179 699
DE-A-3 531 455
DE-C- 862 931
DE-U-1 645 352
DE-U-1 942 562
US-A-3 705 967

PATENT ABSTRACTS OF JAPAN, vol. 8, no. 236 (C-249)1673r; & JP - A - 59 116 318 (MITSUBISHI DENKI K.K.) 05-07-1984

(73) Proprietor: **ASEA AB**
**S-721 83 Västeras (SE)**

(72) Inventor: **Andersson, Lars**
**Villebradsgatan 9**
**S-722 43 Västeras (SE)**
Inventor: **Backlund, Hans**
**Klockartorpsgatan 15F**
**S-723 44 Västeras (SE)**
Inventor: **Henriksson, Bengt**
**Pingstliljevägen 16**
**S-722 43 Västeras (SE)**
Inventor: **Moström, Thomas**
**Vitmaragatan 22**
**S-722 26 Västeras (SE)**

(74) Representative: **Boecker, Joachim, Dr.-Ing.**
**Rathenauplatz 2-8**
**D-6000 Frankfurt a.M. 1 (DE)**

(56) References cited:
STAHL UND EISEN, vol. 104, no. 22, October 1984, pages 1161-1165, Düsseldorf; H. WIESINGER et al.: "Brammenwarmeinsatz und Direktwalzung"

Courier Press, Leamington Spa, England.

## Description

The invention relates to an inductive heater for heating the edges of a longitudinally extending body with a flat cross-section according to the precharacterising part of claim 1. Such in inductive heater is known from an article in "Stahl und Eisen", 1984, pages 1161-1165, particularly figure 7 on page 1163.

In the first place, the inductive heater according to the invention is designed to be employed in hot rolling operations, whereby said body may be a slab, a strip or a sheet.

In conventional hot rolling, cold rolled slabs are heated to the rolling temperature, for example in fuel-fired furnaces. This method is called "cold charging". An improvement of this method, known as "hot charging", comprises placing a continuously-cast hot slab, in a heat-insulated box for subsequent additional heating in a fuel-fired furnace prior to the rolling.

Latterly, there has been a general desire to change to direct rolling, for example immediately after a continuous casting operation or a preceding hot rolling operation.

After, for example, continuous casting the greater part of the cross-section area of the cast slab has a suitable rolling temperature, whereas the edges have cooled to a temperature too low for direct rolling.

In hot rolling of sheet and strip material, the edges cool more rapidly than the rest of the cross-section. This is particularly noticeable in a subsequent fine rolling. Increased wear on the rolls is caused by the colder edges. Cold edges also make the strip liable to cracking.

In the publication "Stahl und Eisen", 1984, pages 1161-1165, the upper and lower portions of the coil with conductor sections extending in the longitudinal direction of the body are bent at right angle around the edge of the body. With this arrangement the heat imparted to the different regions of the edge portions is approximately the same for all these regions.

The DE-C-862 931 describes a method and a device for electro-inductive heating of work pieces including plate-shaped work pieces. According to one embodiment of this device two conductors with their currents flowing in opposite directions are placed in parallel to each other and in a plane parallel and close to one surface of the workpiece whereby the intensity of the heating is controlled by the mutual distance between the two conductors. According to another embodiment two conductors completely surround the workpiece with a large mutual distance at the edge portions and a small mutual distance at the mid portion of the body.

The invention aims at developing an inductive heater of the above-mentioned kind enabling to impart heat to the edges of a longitudinally extending body with a flat cross-section or flat or pointed cross-sectional portions, particularly to the edges of a slab, strip or sheet, whereby the intensity of the heat imparted to the edge portion decreases towards the center of the body.

To achieve this aim the invention suggests a inductive heater for heating the edges of a longitudinally extending body with a flat cross-section according to the introductory part of claim 1, which is characterized by the features of the characterizing part of claim 1.

Further developments of the inductive heater and preferable ways of its application are characterized by the features of the additional claims.

By using the inventive inductive heaters for example in rolling mills, the edges of slabs being fed from a continuous casting machine or the edges of strips or sheets being fed from a hot rolling mill or a pair of hot rolls can immediately be heated to a temperature approximately corresponding to that of the rest of the slab, strip or sheet on their way to a subsequent pair of rolls. By shaping the coils in such a way that the bent-off-portions of the coils extend inclined to the longitudinal direction of the body, the amount of heat imparted to the different regions of the edge portions can be adjusted so as to reheat the body to approximately the same temperature at all sections. The inductive heater is not only applicable for a body having a flat cross-section. It can also be used to heat the edges, for example, of the flanges of a U-beam or a T-beam.

The advantage of applying inductive heaters in a rolling plant are as follows:

— Great energy savings in comparison with prior art methods
— A higher material yield due to a reduced number of oxide scales
— A shorter process time
— Reduced roll wear
— Longer time intervals between roll changing
— Improved quality of the as-rolled material
— Reduced number of edge cracks.

The invention will now be described in greater detail with reference to the accompanying drawings showing by way of example - in

Figure 1 a side view perpendicular to a moving slab or strip of an inductive heater surrounding one edge of the slab or strip,

Figure 2 a section along the line C-C in Figure 1,

Figure 3 a sectional view similar to that of Figure 2 of an inductive heater in greater detail,

Figure 4 a view on the inductive heater in Figure 3 from the opposite edge of a passing slab or strip.

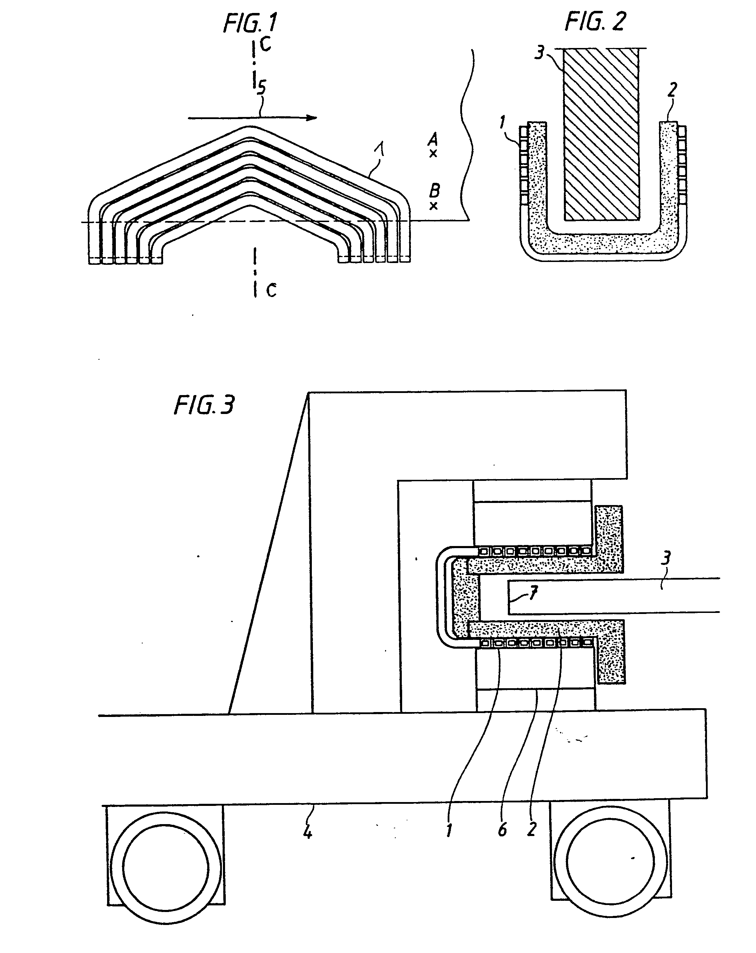

A continuously cast slab 3 or a hot-rolled strip or a sheet, the edges of which have cooled to below a temperature suitable for a subsequent hot rolling operation, is surrounded at the edges on three sides by an inductive heater 1 in the form of a bent plane coil, inside of which a ceramic layer 2 is arranged (see Figure 2).

The portions of the coil bent inwardly to surround the edge of the slab or strip 3 are V-shaped with their tip directed towards the passage of the slab or strip 3 (see arrow 5 in Figure 1) through the inductive heater. Thus the inwardly bent portion of the coil is larger at the outermost portion B of the edge of the slab or strip 3 than at the portion A positioned closer to the central portion of the slab or strip 3. Therefore, the greatest part of the heating is applied to the point where the cooling has advanced furthest. Normally, both the edges are heated.

In the case of a thicker slab, strip or sheet (e.g. 200-300 mm), single-phase current of a frequency in the range of about 50 to 1000 Hz is supplied to the coil 1, and in the case of thinner striP or sheet (e.g. 20 mm) single-phase current of a frequency in the range of about 1000 to 3000 Hz is supplied to the coil 1.

The depth of penetration of the currents induced in the slab, strip or sheet is greater in the case of a lower frequency of the current supplied to the coil, which explains the frequency choice.

The heating takes place either after a continuous casting operation or after a preceding hot rolling operation.

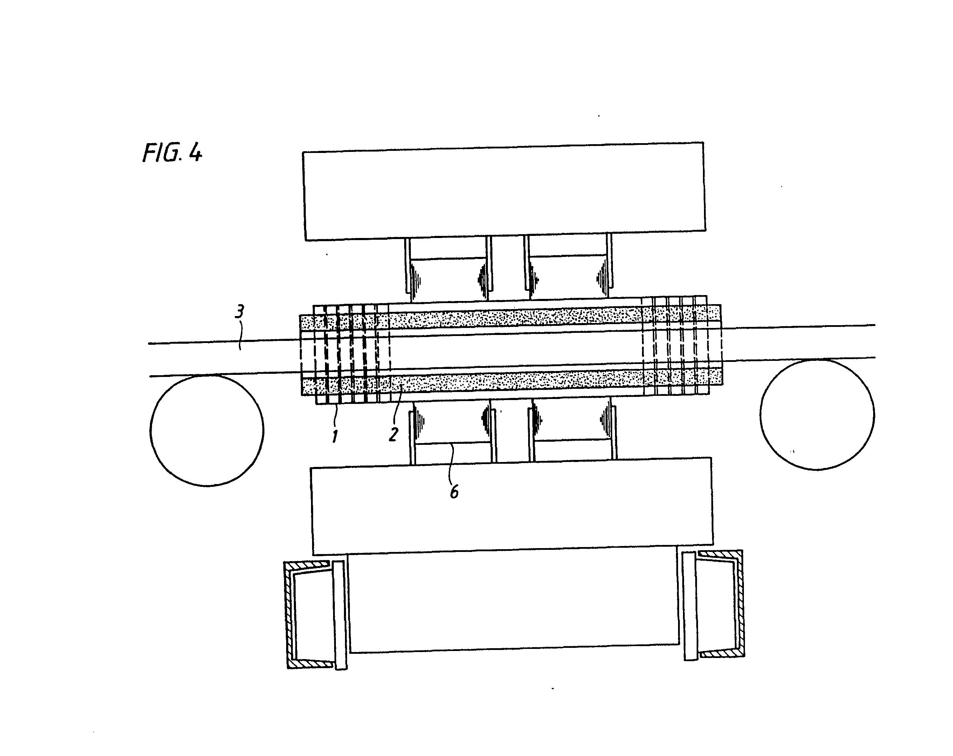

An inductive heater according to the invention is shown in Figures 3 and 4. These figures show an inductive heater arranged on a movable car 4. It is seen in Figure 3 how the coil 1 with a ceramic layer 2 and a surrounding iron yoke 6 can be moved to and from the heating position in relation to the edge 7 of the passing slab 3. The heating is, of course, suitably performed along both the edges after the egress of the slab or strip 3 from the continuous casting machine or the preceding hot rolling mill. The degree of overlap of the heater over the edge 7 of the slab or strip 3 can be adjusted such that a uniform temperature is obtained throughout the slab or strip which is to be hot rolled in a subsequent rolling mill. Figure 4 shows the same heater seen from the opposite edge of the passing slab or strip 3 the longitudinal extension of which is also shown here.

The exact design of the inductive heater is, of course, determined by the shape of the slab, strip or sheet; however, in principle the edge is to be surrounded on three sides by the inductive heater and the heating shall have its maximum at the outermost portion of the edge (at 7 in Figure 3).

The inductive heater as described above can be varied in many ways within the scope of the disclosed inventive idea.

## Claims

1. Inductive heater for heating the edges of a longitudinally extending body having a flat cross-section or a cross-section comprising flat or pointed portions, the heater and/or the body being movable relatively to each other in said longitudinal direction, the flat coil(s) of said inductive heater being arranged to partially surround the cross-section of the body, i.e. at least one edge of the cross-section, over a definite length of said body for heating this edge, characterized in that the one or more coils are bent to deviate from said longitudinal direction so that the regions of the body which are proximate to said edge or edges pass through the coil for a longer time and are heated more strongly than those regions which are remote from the edge(s) of the body.

2. Inductive heater according to claim 1, characterized in that the parts of the coil (1) at the sides of the edge of said body are bent into V-shape with the tips directed away from the edge of the body.

3. Inductive heater according to claim 1 or 2, characterized in that a ceramic layer (2) is arranged inside the coil (1) nearest to the heated body.

4. Use of one or more inductive heaters according to any of the preceding claims in a rolling process for heating the edges of a slab which is fed out from a continuous casting machine, or a strip or a sheet which is fed out from a hot rolling mill or a pair of hot rolls, to a temperature approximately corresponding to that of the rest of the slab, strip or sheet.

5. Use of one or more inductive heaters according to any of the preceding claims in a rolling process for heating the edges of a hot rolled sheet (3), or the like, which is passing out from a hot rolling mill or a pair of hot rolls and which is being fed into a subsequent pair of rolls, said heater or heaters being adapted to be supplied by a single-phase current with a frequency in a range of about 1000-3000 Hz.

## Patentansprüche

1. Induktionsheizer zum Erwärmen der Kanten länglicher Werkstücke mit flachem Querschnitt oder mit einem Querschnitt, der flache oder spitze Abschnitte enthält, wobei der Heizer und/oder der Körper relativ zueinander in der genannten Längsrichtung beweglich sind/ist und die flache Spule (flachen Spulen) des Induktionsheizers so angeordnet sind, daß sie den Querschnitt des Körpers teilweise, d.h. zumindest eine Kante des Querschnittes, über eine definierte Länge des genannten Körpers zwecks Aufheizung dieser Kante umgibt/umgeben, dadurch gekennzeichnet, daß die eine oder mehreren Spulen derart in einer von der genannten Längsrichtung abweichenden Richtunq gebogen sind, daß die Bereiche des Körpers, die der genannten Kante oder den Kanten am nächsten liegen, für eine längere Zeit durch die Spule laufen und stärker aufgeheizt werden, als diejenigen Bereiche, welche von der Kante (den Kanten) des Körpers entfernt liegen.

2. Induktionsheizer nach Anspruch 1, dadurch gekennzeichnet, daß die Teile der Spule (1) an den Seiten der Kante des genannten Körpers in eine V-Form gebogen sind, wobei die Spitzen der V's von der Kante des Körpers wegweist.

3. Induktionsheizer nach einem der Ansprüche 1 oder 2, dadurch gekennzeichnet, daß eine keramische Schicht (2) auf der Innenseite der Spule nahe dem aufzuheizenden Körper angeordnet ist.

4. Verwendung eines oder mehrerer Induktionsheizer nach einem der vorhergehenden Ansprüche bei einem Walzvorgang zur Aufheizung der Kanten eines Brammens, der aus einer Stranggießmaschine herauskommt, oder eines Bandes oder eines Bleches, welches aus einem Heißwalzwerk oder einem heißer Walzenpaar herauskommt auf eine Temperatur, die annähernd der des restlichen Brammens, Bandes oder Bleches entspricht.

5. Verwendung eines oder mehrerer Induktionsheizer nach einem der vorhergehenden Ansprüche bei einem Walzvorgang zum Aufheizen der Kanten eines heißgewalzten Bleches (3) oder dergleichen, welches aus einem Heißwalzwerk oder einem heißen Walzenpaar herauskommt und in ein nachfolgendes Walzenpaar eingespeist wird, der genannte Heizer oder die genannten Heizer so beschaffen sind, daß sie mit einem einphasigen Strom mit einer Frequenz im Bereich von etwa 1000-3000 Hz gespeist werden.

**Revendications**

1. Dispositif de chauffage par induction pour chauffer les bords d'un produit s'étendant dans une direction longitudinale et ayant une section transversale plate ou une section transversale comprenant des parties plates ou pointues, le dispositif de chauffage et/ou le produit pouvant être déplacés l'un par rapport à l'autre dans la direction longitudinale, la ou les bobines plates du dispositif de chauffage par induction étant conçues de façon à entourer partiellement la section transversale du produit, c'est-à-dire au moins un bord de la section transversale, sur une longueur définie du produit, pour chauffer ce bord, caractérisé en ce que la ou les bobines sont courbées de façon à s'écarter de la direction longitudinale, afin que les régions du produit qui sont proches du ou des bords traversent la bobine pendant une plus longue durée et soient chauffées plus fortement que les régions qui sont éloignées du ou des bords du produit.

2. Dispositif de chauffage par induction selon la revendication 1, caractérisé en ce que les parties de la bobine (1) qui se trouvent sur les côtés du bord du produit sont courbées de façon à avoir une forme en V, avec les pointes dirigées du côté opposé au bord du produit.

3. Dispositif de chauffage par induction selon la revendication 1 ou 2, caractérisé en ce qu'une couche de céramique (2) est placée à l'intérieur de la bobine (1), le plus près du produit qui est chauffé.

4. Utilisation d'un ou de plusieurs dispositifs de chauffage par induction selon l'une quelconque des revendications précédentes dans un processus de laminage, pour chauffer les bords d'une brame qui sort d'une machine de coulée continue, ou une bande ou une tôle qui sort d'un laminoir à chaud ou d'une paire de cylindres chauds, jusqu'à une température qui correspond approximativement à celle du reste de la brame. de la bande ou de la tôle.

5. Utilisation d'un ou de plusieurs dispositifs de chauffage par induction selon l'une quelconque des revendications précédentes dans un processus de laminage, pour chauffer les bords d'une tôle laminée à chaud (3), ou d'un produit similaire, qui sort d'un laminoir à chaud ou d'une paire de cylindres chauds, et qui est introduit dans une paire de cylindres suivante, ce ou ces dispositifs de chauffage étant conçus pour être alimentés par un courant monophasé avec une fréquence dans une gamme d'environ 1000-3000 Hz.

EP 0 183 209 B1

FIG.1

FIG. 2

FIG.3

FIG. 4

EP 0 183 209 B1